# EUROPÄISCHE PATENTSCHRIFT

(11) **EP 0 830 228 B1**
(45) Veröffentlichungstag und Bekanntmachung des Hinweises auf die Patenterteilung: **26.07.2000**
(21) Anmeldenummer: 96919612.0
(22) Anmeldetag: 23.05.1996
(51) Int. Cl.: B23C 3/06, B23C 5/20

(54) **VERFAHREN ZUR SPANENDEN BEARBEITUNG VON ZYLINDRISCHEN KONTUREN, VORRICHTUNG ZUR DURCHFÜHRUNG DES VERFAHRENS UND SCHNEIDEINSATZ HIERZU**
METAL-CUTTING PROCESS FOR MACHINING CYLINDRICAL CONTOURS, DEVICE FOR CARRYING OUT THE PROCESS AND CUTTING INSERT THEREFOR
PROCEDE D'USINAGE PAR ENLEVEMENT DE COPEAUX DE CONTOURS CYLINDRIQUES, DISPOSITIF DE MISE EN UVRE DU PROCEDE ET PLAQUETTE DE COUPE ASSOCIEE

(30) Priorität: 06.06.1995 DE 19519951; 06.06.1995 DE 19520058; 11.12.1995 DE 19546196
(43) Veröffentlichungstag der Anmeldung: 25.03.1998
(73) Patentinhaber: Widia GmbH, 45145 Essen (DE)
(72) Erfinder: RAMOLD, Klaus, D-91639 Wolframs-Eschenbach (DE); HEINLOTH, Markus, D-90584 Allersberg (DE); GESELL, Reinhold, D-91629 Weihenzell (DE); STALLWITZ, Erwin, D-91586 Lichtenau (DE)
(74) Vertreter: Vomberg, Friedhelm, Dipl.-Phys.
(86) Internationale Anmeldenummer: DE9600947
(87) Internationale Veröffentlichungsnummer: WO9639269

(56) Entgegenhaltungen:
- EP-A- 0 372 717
- EP-A- 0 505 574
- US-A- 2 290 324
- US-A- 3 279 034
- US-A- 3 279 035

## Beschreibung

Die Erfindung betrifft einen Schneideinsatz und ein Fräsverfahren zur spanenden Bearbeitung von zylindrischen Konturen, von exzentrisch angeordneten zylindrischen Konturen an einem um seine Längsachse rotierenden Werkstück, von zentrisch eingespannten Kurbelwellenhublagern vermittels drehbarer, antreibbarer Werkzeuge, bei dem eine Fertigkontur so erzeugt wird, daß diese entweder bei ausreichender Oberflächenqualität Endmaße aufweist oder noch ein Aufmaß zur Durchführung einer Fertigbearbeitung, wie Schleifen oder Schlichten, aufweist, wobei zur Herstellung der Fertigkontur die mit erfindungsgemäßen Schneideinsätzen, insbesondere Wendeschneidplatten bestückten Werkzeuge nacheinander oder auch gleichzeitig mit dem Werkstück in Eingriff gebracht werden, sowie eine Vorrichtung zur Durchführung des Verfahrens mit mindestens einem Werkzeug mit Schneideinsätzen.

Nach einem bekannten Verfahren erfolgt die Bearbeitung von Kurbelwellenhublagern durch Drehräumen oder Dreh-Drehräumen so, daß die Kurbelwelle exzentrisch gelagert wird, um eine reine Rotation um die Hubzapfenmittelachse zu erzeugen. Bei dieser Lagerung ist auch eine Wangebearbeitung möglich, jedoch hat sich diese Art der Bearbeitung als störanfällig erwiesen, außerdem sind die Spannfutter zur exzentrischen Lagerung der Kurbelwelle teuer. Hinzu kommt, daß die Bearbeitung durch Drehräumen mit einem Werkzeug so erfolgt, daß in einem Arbeitsgang ein Fertigprofil erzeugt wird, das lediglich im Bereich des Zapfens noch einer Fertigbearbeitung durch Schleifen bedarf. Bei dieser Bearbeitung muß für jedes unterschiedliche Kurbelwellenhublager ein unterschiedliches Werkzeug verwandt werden.

Verfahrensgemäß werden dabei nach dem Stand der Technik Werkzeugträger eingesetzt, wobei auf dem Werkzeugträger mehrere Schneideinsatztypen Verwendung finden.

Die US-A-2 290 324 beschreibt ein Verfahren zur spanenden Bearbeitung von Kurbelwellen, die beidseitig eingespannt und rotierend gegenüber den Fräswerkzeugen bewegt werden.

Aus der EP 0372717 A2 ist ein Innenfräser bekannt, der das zu fräsende Hublager umläuft.

Die US-A-3 279 034 beschreibt einen Fräser mit Schneideinsätzen, deren Spanfläche konvex gewölbt ist.

Mittels dieser Werkzeugträger werden die Wangen und Unterstiche zu beiden Seiten der Kontur und der Zapfen über die gesamte Breite in jeweils einem Schnittvorgang gefertigt. Pro Fertigkontur wird somit ein Werkzeugträger benötigt.

Nach einer speziellen Maßgabe des Verfahrens ist vorgesehen, daß in einem ersten Schritt die Bearbeitung der Hublagerwangen und in einem zweiten Bearbeitungsschritt die Zapfenbearbeitung zur Erzeugung des Zapfendurchmessers und des Unterstiches erfolgt.

Nach einem zweiten bekannten Verfahren wird die Kurbelwelle eingespannt und mit einem Innenfräser bearbeitet, der in einem Umlauf um das Hublager bewegt wird. Nachteile dieser Bearbeitung sind große Wege und große bewegte Massen, so daß ein Hochgeschwindigkeitsfräsen nicht möglich ist.

Ein Fräskopf zur Erzeugung eines Lagerprofiles an einer Kurbelwelle in einem Arbeitsgang ist aus der DE 38 24 348 A1 bekannt. Der hierzu vorgeschlagene Fräskopf in Scheiben- oder Wirbelbauart zum Bearbeiten von Kurbelwellen, die als fräsend zu bearbeitende Oberflächen eine parallel zur Fräskopfachse liegende Zylinderoberfläche enthalten, die vorzugsweise beidseitig über eine rotationssymmetrisch geformte Kehlfläche in eine annähernd achsensenkrechte Fläche übergeht, mit an dem äußeren oder inneren Schneidumfang des Fräskopfes in Halterung angebrachten Sätzen von Wendeschneidplatten, ist so ausgebildet, daß mehrere Sätze von Wendeschneidplatten gleichmäßig am Schneidenumfang des Fräskopfes angeordnet sind, daß jeder Satz von Wendeschneidplatten vollständig die Meridiankontur der zu bearbeitenden Oberfläche des Werkstückes überdeckt und daß innerhalb eines Satzes von Wendeschneidplatten für jede bestimmte zu bearbeitende Oberflächenpartie des Werkstückes mindestens eine Wendeschneidplatte vorgesehen sind, ist mit speziellen Wendeschneidplatten so bestückt, daß alle zu erstellenden Kantenflächen gleichzeitig bearbeitet werden.

Ein als Wendeschneidplatte zu bezeichnender Schneideinsatz, der einen polygonalen flächigen Körper mit mindestens einer Hauptschneidkante, einer Span- und einer Freifläche aufweist, ist aus der DE 44 00 570 bekannt.

Die EP 0505574 A1 beschreibt einen in der Grundform quadratischen Schneideinsatz, der in Schneideckennähe abgeschrägte und zurückgesetzte ebene Freiflächenabschnitte aufweist, wodurch an einem Schneidende eine negative Fase gebildet wird.

Ein Fräsen mit hoher Schnittgeschwindigkeit von über 160 m/min konnte, obwohl es wirtschaftliche Vorteile infolge verkürzter Bearbeitungszeiten verspricht, beim Zerspanen zylindrischer Konturen, insbesondere beim Kurbelwellenfräsen bis heute nicht angewendet werden, weil bei den bis heute verwandten Werkzeugen
a) wegen der großen Spanungsdicken und der relativ wenigen gleichzeitig im Eingriff stehenden Schneiden infolge der sehr unterschiedlichen Kräfteverteilung ein sehr ungünstiges Schwingungsverhalten entsteht,
b) durch die Verwendung von Wendeschneidplatten mit negativem Spanwinkel zu hohe Zerspanungstemperaturen erzeugt werden,
c) die hohen Bearbeitungsgeschwindigkeiten einen so schnellen Werkzeugverschleiß verursachen, daß die hinsichtlich der Lagerbreite sehr engen Toleranzen nicht mehr eingehalten werden können, dadurch häufige Wendeschneidplatten-Wechsel notwendig werden, die den wirtschaftlichen Vorteil des Hochgeschwindigkeitsfräsens bei der Kurbelwellenbearbeitung wieder zunichte machen.

Ausgehend von diesem Stand der Technik ist es Aufgabe der Erfindung, die spanende Bearbeitung zylindrischer Konturen, insbesondere die Kurbelwellenbearbeitung dahingehend zu verbessern, daß bei Beibehaltung oder Steigerung der Oberflächenqualität und bei Beibehaltung oder Steigerung der Maßgenauigkeit eine Reduzierung der Bearbeitungszeiten erreicht wird, wobei gleichzeitig die Gesamtwirtschaftlichkeit erhöht werden soll.

Zur Lösung dieser Aufgabe wird das im Patentanspruch 1 angegebene Verfahren vorgeschlagen.

Unter dem sogenannten erfindungsgemäßen Hochgeschwindigkeitsfräsen, d.h. einer spanabhebenden Bearbeitung mit einem Fräser (Außenfräser), wird die Bearbeitung
a) mit einer hohen Schnittgeschwindigkeit von über 160 m/min,
b) mit geringen Spanungsdicken im Bereich von 0,1 mm bis 0,3 mm, insbesondere im Bereich von 0,2 mm bis 0,25 mm und
c) mit einer geringen Schnittbogenlänge verstanden.
Unter Schnittbogenlänge wird dabei die mit den entsprechenden Schneideinsätzen im Eingriff befindliche Länge des Werkzeugträgers in bezug auf seinen Gesamtumfang bezeichnet.

Durch Hochgeschwindigkeitsfräsen können so gute Oberflächenqualitäten erzeugt werden, daß das Vorschleifen oder zusätzliche Vorbehandlungen vor der Wärmebehandlung als zusätzlicher Arbeitsvorgang vollständig entfallen kann.

Zumindest ein Teil der Schneideinsätze, vorzugsweise alle Schneideinsätze weisen einen positiven Spanwinkel auf. Die Schneideinsatzeinstellung zum Werkstück wird dergestalt vorgenommen, daß der effektive Spanwinkel zwischen -5° und +15°, vorzugsweise -5° bis +5°, und/oder ein positiver axialer Spanwinkel (Rückspanwinkel γₚ) bis zu 10° gewählt wird.

Das erfindungsgemäße Verfahren ist eine Bearbeitungsweise, die sich besonders zur spanenden Bearbeitung von exzentrisch angeordneten zylindrischen Konturen, insbesondere speziell von Kurbelwellenhublagern, bei zentrisch eingespanntem Werkstück eignet. Daher können sowohl die problematisch zu fertigenden Hublager als auch die Hauptlager auf der gleichen Vorrichtung bzw. bei Reihen- oder Parallelschaltung von mehreren Vorrichtungen auf gleichartigen Vorrichtungen gefertigt werden.

Die Herstellung der Fertigkontur, die als solche bereits Endmaße aufweist oder noch ein Aufmaß, das durch Schleifen oder Schlichten abgetragen werden kann, mit Werkzeugen, die mit Schneideinsätzen bestückt nacheinander oder auch gleichzeitig mit dem Werkstück in Eingriff gebracht werden, wird auch als sogenannte Schnitteilung bezeichnet. Hierunter versteht man beispielsweise die Aufteilung der Bearbeitung der Wangen einer Kurbelwelle und die Bearbeitung des Unterstiches und des Zapfens einer Kurbelwelle oder die Herstellung einer halben Kurbelwellen-Wangenkontur mit einem Unterstich und einem Durchmesseranteil mit einem ersten Werkzeug und die Herstellung eines zweiten Unterstiches und des restlichen Durchmesseranteiles mit einem zweiten Werkzeug. Durch eine solche Aufteilung bzw. Bearbeitung mit geteiltem Werkzeug ist es möglich, die Lagerbreite in bestimmten Grenzen zu variieren, d.h. auch unterschiedlich breite Lager mit einem rechten und einem linken Werkzeug zu erzeugen und/oder Veränderungen der Lagerbreite infolge eines Werkzeug-Verschleißes durch Nachstellung mittels einer NC-Steuerung zu korrigieren.

Die Bearbeitung erfolgt dabei so, daß das Werkzeug mit konstanter oder variabler hoher Drehzahl angetrieben wird, so daß eine Hochgeschwindigkeitszerspanung erreicht wird. Vorzugsweise wird bei variabler Drehzahl diese schrittweise linear geändert. Dadurch können die Vorteile von Hochgeschwindigkeitsfräsern jetzt auch bei der Kurbelwellenbearbeitung erreicht werden, nämlich Steigerung der Oberflächenqualität, Steigerung der Maßgenauigkeit und Reduzierung der Bearbeitungszeiten. Für die Anwendung des Hochgeschwindigkeitsfräsens war es nötig, verschiedene Vorurteile und Probleme zu überwinden. So war die Verwendung der bereits bekannten Schneideinsätze in bestehendem Werkzeug auf bekannten Vorrichtungen nicht möglich, da sich zu hohe Kräfte und eine zu hohe Erwärmung für die Werkzeuge ergab. Bei labilen Kurbelwellen tritt ggf. eine große Schwingungsneigung auf. Dieser kann dadurch entgegengewirkt werden, daß eine Aufteilung in mindestens zwei Fräsvorgänge vorgenommen wird. Durch die Aufteilung werden verschiedene Vorteile realisiert. Während bei der Verwendung eines einzigen Werkzeuges axiale und radiale Anregungen auftreten, wodurch sich eine starke Schwingungsneigung ergab, kann die Aufteilung jetzt so gewählt werden, wo diese weitgehend vermieden wird. Außerdem ist es möglich geworden, insbesondere bei NC-Steuerungen eine Nachstellung durchzuführen, so daß ein Verschleiß am Werkzeug bzw. an dem oder den Schneideinsätzen ausgeglichen werden kann. Außerdem kann die Bemaßung beliebig gewählt werden, so daß die Fertigung unterschiedlicher Kurbelwellen auf der gleichen Fertigungsstraße jetzt problemlos möglich ist.

Bei der erfindungsgemäßen Vorgehensweise mit zwei Werkzeugen, die als "geteiltes Werkzeug" bezeichnet werden können, ergeben sich verschiedene Vorteile, denn es können unterschiedliche Konturen mit den gleichen Werkzeugen erzeugt werden und es kann auch eine Korrektur zum Ausgleich eines Verschleißes an den Schneideinsätzen, insbesondere den Wendeschneidplatten erfolgen.

Erfindungsgemäß handelt es sich bei den Werkzeugen um mit entsprechenden Schneideinsätzen versehene Hochgeschwindigkeitsfräser. Gemäß einer speziellen Ausführungsform sind die Schneideinsätze so ausgebildet und angeordnet, daß in einem Einstichvorgang jeweils etwa die Hälfte der Fertigkontur des Zapfens erzeugbar ist. Bevorzugterweise wird hierzu ein Scheibenfräser verwendet.

Nach einer besonderen Ausführungsform der Erfindung sind dabei auf dem Werkzeug Wendeschneidplatten zur Wangenbearbeitung und auf einem anderen Werkzeug Wendeschneidplatten zur Zapfenbearbeitung und für den Unterstich angebracht.

Nach einer weiteren, besonders vorteilhaften Ausführungsform der Erfindung werden die Schneideinsätze auf mindestens zwei Werkzeugträger so verteilt, daß ein erstes Werkzeug die rechte Seite der Kontur einschließlich der Hälfte des Zapfens und ein zweites Werkzeug die linke Seite der Kontur einschließlich der Hälfte des Zapfens bearbeitet.

Zur Korrektur des Überschnittes wird ein erfindungsgemäß speziell gestalteter Schneideinsatz verwendet, der nachstehend noch in seiner Gestaltung beschrieben ist. Unter einem Überschnitt ist der Überdeckungsbereich in einer bearbeiteten Werkzeugfläche zu verstehen, der sich durch Bearbeitung mittels zweier Schneidplattenreihen eines Werkzeuges oder zweier Werkzeuge ergibt. Durch Fertigungsungenauigkeiten oder - bei geteiltem Werkzeug - durch Positionierungsungenauigkeiten der Bearbeitungsmaschine entsteht ein Höhenversatz zweier Schneidplatten bzw. Schneidplattenreihen. Hierdurch ergibt sich in dem Überdeckungsbereich ein unerwünschter scharfkantiger Absatz. Um diesen zu verhindern, besitzen die Spanflächen der vorzugsweise verwendeten Schneideinsätze im Bereich der eine Schneidecke bildenden Hauptschneidkante eine Abflachung oder Einziehung, die sich in den Bereich beider benachbarter Hauptschneidkanten erstreckt. Die Verwendung solcher Schneideinsätze ermöglicht die Fertigung äußerst sanfter Übergänge im Überdeckungsbereich, die sich sowohl meßbar als auch optisch im Sinne einer optimalen Oberfläche, beispielsweise der Zapfenoberfläche eines Kurbelwellenhubzapfens auswirkt.

Durch die Schnitteilung, d.h. die Aufteilung der Werkstückbearbeitung in mindestens zwei Bearbeitungen, wird erreicht, daß während des Fräsvorganges weniger Schneiden gleichzeitig im Eingriff sind, wodurch die Kräfte auf das Werkzeug und damit die Schwingungsanregung vermindert wird.

Durch die Verwendung eines Schneideinsatzes mit positivem Schneidwinkel wird die Zerspanungstemperatur gesenkt, die auf das Werkzeug wirkenden Kräfte und damit die Schwingungsanregung weiter vermindert.

Ein weiterer Vorteil des erfindungsgemäßen Verfahrens besteht darin, daß im Falle der Aufteilung der Schneideinsätze, insbesondere der Wendeschneidplatten zur Herstellung rechter und linker Hälften der Kontur, der Verschleiß an den Schneideinsätzen durch Verfahren des Werkzeuges in axialer oder radialer Richtung ausgeglichen werden kann.

Würde die Komplettkontur durch ein einziges Werkzeug hergestellt, müßte mindestens eine Wendeschneidplatte zurückgesetzt, d.h. manuell versetzt werden, um den Verschleiß auf beiden Seiten auszugleichen.

Eine weitere Ausgestaltung der Vorrichtung sieht vor, daß mindestens ein Werkzeugträger ein orthogonaler Drehfräser ist.

Die Vorrichtung zur Durchführung des erfindungsgemäßen Zerspanungsverfahrens soll pro Kurbelwellenhublager einen Support aufweisen, der für Fräsoperationen mit mindestens einer nachführbaren Achse und für orthogonales Drehfräsen mit zwei nachführbaren Achsen ausgerüstet ist, damit das Werkzeug in Abhängigkeit vom Drehwinkel des Werkstückes so nachgeführt werden kann, daß sich nach der spanenden Bearbeitung der exzentrisch angeordneten Kurbelwellenhublager eine zylindrische Korrektur ergibt und die oben beschriebenen Korrekturvorgänge zum Ausgleich des Wendeschneidplattenverschleißes durchgeführt werden.

Die spezielle Vorgehensweise besteht darin, daß das Werkzeug auf einer Achse in Abhängigkeit vom Drehwinkel des Werkstückes so nachgeführt wird, daß sich nach der spanenden Bearbeitung eine zylndrische Kontur ergibt. Aufgrund der hohen Schnittgeschwindigkeit und der geringen Spanungsdicken resultieren geringe Kräfte auf das Werkstück, die das Zerspanen auf dem labilen Werkstück begünstigen. Gleichzeitig ergeben sich durch die geringeren Vorschubwerte und die hohen Schnittgeschwindigkeiten bessere Oberflächenqualitäten, als diese bisher durch vergleichbare Verfahren erzielt werden konnten.

Dadurch, daß der Gesamtumfang des Werkzeuges in bezug auf die eingesetzte Schnittbogenlänge groß bemessen ist, wird erreicht, daß jeder einzelne Schneideinsatz in bezug auf den Drehwinkel des Werkzeuges nur kurz zum Einsatz kommt, so daß eine lange Abkühlzeit gegeben ist. Außerdem ist es möglich, eine große Anzahl von Schneideinsätzen anzuordnen, so daß hohe Standzeiten und Einsatzdauern jedes Werkzeuges erreicht werden können.

Besonders vorteilhaft ist es, wenn verfahrensgemäß das Hochgeschwindigkeitsfräsen und das orthogonale Drehfräsen kombiniert werden, da hierdurch die Vorteile beider Bearbeitungsarten optimal miteinander kombiniert werden können. Vorzugsweise weist eine Vorrichtung zur Durchführung des Verfahrens hierzu mehrere Supporte auf, wobei das Werkzeug zum orthogonalen Drehfräsen auf zwei Schlitten gelagert ist, um das Werkzeug dem Werkstück nachzuführen.

Die Aufteilung des Werkzeuges und die Durchführung von mindestens zwei Fräsvorgängen führt dazu, daß bevorzugterweise die Kontur durch zwei Werkzeuge erzeugt wird, die sich auf zwei angetriebenen Werkzeugträgern in der Vorrichtung befinden. Die Vorteile eines geteilten Werkzeugkonzeptes gegenüber der früheren Erstellung der Kontur als Komplettkontur durch ein einziges Werkzeug in einem Schnittvorgang bestehen darin, daß
1. die durch Verschleiß verursachte Abnahme der Werkzeugbreite durch Verfahren des Werkzeuges leicht kompensiert werden kann,
2. aufgrund der in einer leichten Schräge auslaufenden Wendeschneidplatte (Schneideinsatz) zur Zapfenerzeugung sich bei der erzeugten Kontur ein minimierter Absatzfehler ergibt,
3. die Schnittbreite der zu erzeugenden Lagerzapfen leicht varrierbar ist, d.h., je nach Auslegung kann die erzeugte Lagerbreite mit dem gleichen Werkzeug um ca. 5 mm verändert werden,
4. die Belastung von Maschine und Werkstück durch die kleinen einheitlichen Schnittbreiten kostant gehalten werden kann.

Eine erfindungsgemäße Vorrichtung ist daher so ausgebildet, daß der Schnittvorgang zur Herstellung der Fertigkontur in mindestens zwei Schnittvorgänge aufgeteilt wird (Schnitteilung), wobei die mit Wendeschneidplatten bestückten Werkzeugträger nacheinander in Eingriff gebracht werden und die Werkzeugträger ausschließlich mit Wendeschneidplatten bestückt sind, die einen positivem Spanwinkel aufweisen, wobei die Vorrichtung mindestens zwei mit Schneideinsätzen versehene Werkzeuge aufweist, wobei jedes Werkzeug ein mit entsprechenden Schneideinsätzen versehener Hochgeschwindigkeitsfräser nach Anspruch 5 ist. Bevorzugterweise wird als Werkzeug ein Scheibenfräser verwendet, der mit entsprechenden Wendeschneidplatten versehen ist, die ein Hochgeschwindigkeitsfräsen ermöglichen. Mit einem orthogonalen Drehfräser ist eine optimale Zapfenbearbeitung durchführbar.

Für die Durchführung eines solchen Verfahrens hat es sich als besonders vorteilhaft erwiesen, wenn ein Schneideinsatz nach Anspruch 9 verwendet wird. Vorzugsweise Weiterbildungen dieses Schneideinsatzes werden in den Ansprüchen 10 bis 15 beschrieben. Der Schneideinsatz weist einen an sich bekannten polygonalen flächigen Körper auf und ist vorzugsweise so gestaltet, daß sich bei seinem Einsatz am Werkstück ein positiver Schneidwinkel ergibt. Durch den positiven Schneidwinkel wird die Zerspanungstemperatur gesenkt, ferner werden die auf das Werkzeug wirkenden Kräfte und damit die Schwingungsanregung minimiert. Hierzu erfolgt die Gestaltung so, daß die Summe des Freiwinkels und des Keilwinkels zwischen 85° und 95° ergibt, woraus sich ein effektiver Spanwinkel γ_{f} zwischen -5° und +5° ergibt. Ggf. kann der Spanwinkel auch bis zu 15° betragen. Der Rückspanwinkel γₚ wird positiv gewählt und soll maximal 10° betragen. Bei tangentialer Einbaulage des Schneidkörpers wird die jeweils im Anspruch 10 definierte Freifläche zur wirksamen Spanfläche, während umgekehrt die Spanfläche als wirksame Freifläche verwendet wird. Hieraus ergibt sich in entsprechender Weise, daß die wirksame Freifläche die vorbeschriebenen Abflachungen oder Einziehungen aufweist. Je nach Funktion sind somit pro Schneideinsatz zwei oder auch vier Abflachungen bzw. Einziehungen möglich.

Es hat sich dabei gezeigt, daß die Breite des Schneidkörpers bzw. die Breite der einzusetzenden Hauptschneidkante vorteilhafterweise etwa größer gleich der Hälfte der Breite der zu bearbeitenden Zapfenbreite gewählt wird, so daß durch den nacheinandergeschalteten Einsatz von zwei Schneidkörpern eine optimale Zapfenoberfläche geschaffen wird.

Insbesondere um den Überschneidungsbereich bei dem Einsatz von zwei Schneideinsätzen meßbar und optisch so zu optimieren, daß sich eine nahezu völlig gleichmäßige Zapfenoberfläche ergibt, wird ein spezieller Schneideinsatz vorgeschlagen, bei dem vorgesehen ist, daß für mindestens ein Werkzeug ein Support vorgesehen ist, der eine Verfahrbarkeit des Werkzeuges in zwei zueinander senkrechten Richtungen ermöglicht. Diese spezielle Ausbildung ist optimal an den Einsatzzweck angepaßt. Besonders vorteilhaft ist es dabei, wenn die Spanfläche im Bereich der Schneidkörperecke eine Abflachung oder Einziehung aufweist, d.h., daß bei der Fertigung eines solchen Schneideinsatzes im Bereich der Schneidkörperecke eine Fläche angebracht wird, die dazu führt, daß die Schneidecke gegenüber der Hauptschneidkante zurückliegt. Dies führt zu einem weicheren Übergang im Überschneidungsbereich der Einsatzbereiche von zwei derartigen Einsatzkörpern, so daß bei der Untersuchung, beispielsweise der Zapfenoberfläche eines Kurbelwellenhubzapfens sowohl meßbar als auch optisch eine optimale Oberfläche erzielt wird.

Um die Standzeiten eines solchen Schneideinsatzes, der insbesondere im Bereich der Schneidkörperecke bzw. der Schneidkörperecken besonders hoch belastet ist, weiter zu erhöhen, ist vorgesehen, daß im Bereich der Schneidecken Abflachungen oder Einziehungen als Stützflächen angebracht werden. Stabilisierung eignet sich insbesondere für solche Schneidplatten, die in einem sogenannten geteilten Werkzeug zur Schnitteilung zum Einsatz kommen. Die durchmessererzeugende Schneidplatte des ersten Werkzeuges schneidet hiermit der durch positive Spanwinkel stark gefährdeten Schneidecke 90° ins volle Material des Werkstückes. Durch die Anbringung von Stützflächen an den Freiflächen der Schneidecken kann im dortigen Bereich eine zusätzliche Stabilisierung erfolgen, ohne auf die positive Spanformgeometrie und/oder die vier Schneiden der Schneidplatte zu verzichten.

Weitere bevorzugte Verfahrensmaßnahmen, Ausgestaltungen der Vorrichtung und Ausführungsform des Schneideinsatzes sind in den Unteransprüchen angegeben.

In der Zeichnung ist die Erfindung anhand von Ausführungsbeispielen dargestellt. Es zeigen
- Fig. 1: in einer schaubildlichen Ansicht eine erfindungsgemäße Vorrichtung,
- Fig. 2: in einer schematischen Darstellung die verfahrensgemäße Bearbeitungsweise,
- Fig. 3: in einer schematischen Darstelllung die Arbeitsweise von zwei Schneideinsätzen,
- Fig. 4: die Arbeitsweise von zwei Schneideinsätzen,
- Fig. 5 und 6: in schaubildlichen Darstellungen einen erfindungsgemäßen Schneideinsatz,
- Fig. 7: eine Detaildarstellung des Schneideinsatzes gemäß Fig. 6 und
- Fig. 8 bis 10: in unterschiedlichen Ansichten den erfindungsgemäßen Schneideinsatz.

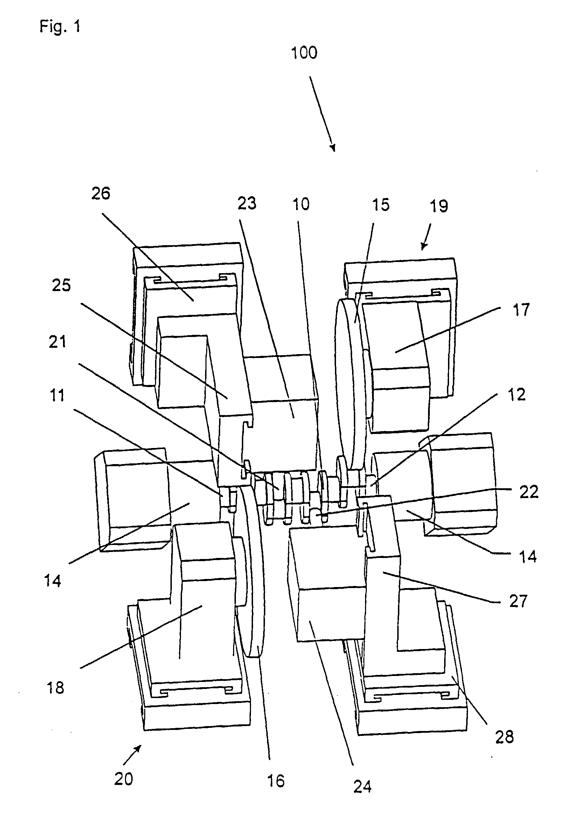

In Fig. 1 ist eine Vorrichtung 100 zur spanenden Bearbeitung rein schematisch im Hinblick auf die im Zusammenhang mit der vorliegenden Erfindung wichtigsten Bauteile dargestellt, die alle in einem in der Zeichnung nicht dargestellten Maschinengestell angeordnet sind. Das Werkstück 10, nämlich eine Kurbelwelle, ist mit ihren Enden 11 und 12 in antreibbaren, drehbaren Einspanfuttern 13, 14 so eingespannt, daß sie um ihre Mittellängsachse drehbar ist.

Zur Bearbeitung dienen die scheibenförmigen Hochgeschwindigkeitswerkzeuge 15, 16, die über entsprechende Antriebe 17, 18 antreibbar sind, wobei jeder Antrieb 17, 18 auf einem Support 19, 20 gelagert ist, wodurch das Werkzeug auf einer Achse dem Werkstück nachgeführt wird.

Weiterhin sind in der Vorrichtung 100 zwei orthognonale Drehfräser 21, 22 angeordnet, die ebenfalls über entsprechende Antriebe 23, 24 drehantreibbar sind. Jeder orthogonale Drehfräser 21, 22 ist auf einem Support mit jeweils zwei Schlitten 25, 26; 27, 28 gelagert, so daß eine Nachführung jedes orthogonalen Drehfräsers 21, 22 auch bei sich drehender Kurbelwelle möglich ist.

Mit der dargestellten Vorrichtung ist die gleichzeitige Bearbeitung von vier Hublagerstellen möglich.

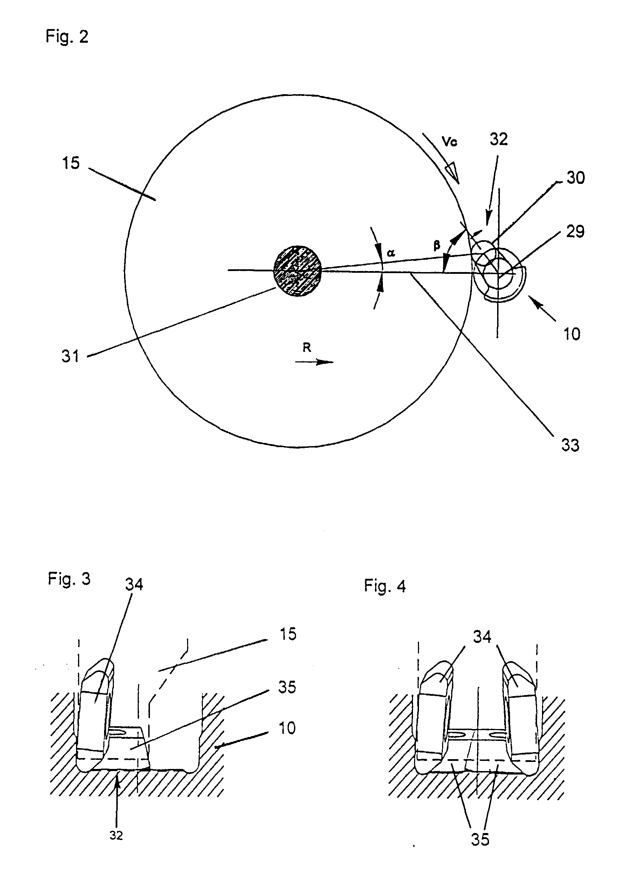

Die Arbeitsweise eines Hochgeschwindigkeitswerkzeuges, wie es in der Vorrichtung 100 Verwendung finden kann, ist rein schematisch in Fig. 2 dargestellt. Um nämlich eine spanende Bearbeitung eines außerhalb des Drehzentrums 29 des Werkstückes 10 exzentrisch angeordneten Kurbelwellenhublagers 30 durchzuführen, wird das scheibenförmige Werkzeug 15 um seine Mittelachse 31 mit konstanter oder variabler hoher Drehzahl angetrieben, so daß die in der Zeichnung nicht dargestellten, auf dem Außenumfang angeordneten Einsatzkörper, nämlich die Wendeschneidplatten mit einer hohen Bearbeitungsgeschwindigkeit Vc an der Bearbeitungsstelle 32 vorbeigeführt werden. Die Bearbeitungsstelle 32 wandert mit der Drehung des Werkstückes 10 um das Drehzentrum 29 und wird aus einer Horizontalebene 33 um einen Winkel β ausgelenkt. Zur Nachführung des Werkzeuges 15 wird dieses in der Horizontalachse 33 in Richtung R nachgeführt, so daß die im Hinblick auf die Mittelachse 31 des Werkzeuges 15 um den Winkel a ausgelenkte Bearbeitungsstelle 32 immer erreicht wird. Das Werkzeug 15 wird dabei auf der in der Horizontalebene 33 liegenden Achse der Werkzeugnachführbewegung in Abhängigkeit vom Drehwinkel β des Werkstückes 10 so nachgeführt, daß sich nach der spanenden Bearbeitung an der Bearbeitungsstelle 32 eine zylindrische Kontur ergibt. Aufgrund der hohen Schnittgeschwindigkeit Vc und der erfindungsgemäß vorgesehenen geringen Spanungsdicken resultieren geringe Kräfte auf das Werkstück 10, die zu einem vorteilhaften Ergebnis führen.

In Fig. 3 ist in einer rein schematischen, teilweise geschnittenen Teildarstellung angedeutet, wie unterschiedliche Einsatzkörper 34, 35 auf einem Werkzeug 15 angeordnet sein können, um an einer Bearbeitungsstelle 32 eines Werkstückes 10 eine zylindrische Kontur, nämlich speziell die Zapfenbearbeitung eines Kurbelwellenhublagers durchzuführen. Dabei erzeugt der Einsatzkörper 34 einen Unterstich, während der Einsatzkörper 35 den Außendurchmesser des Zapfens erzeugt. Die Endkontur wird dabei durch zwei Werkzeuge erzeugt, die identisch bestückt sind und sich aufzwei angetriebenen Werkzeugträgern in der Vorrichtung befinden.

Die Komplettkontur (zwei Unterstiche und die Zapfenbearbeitung) kann durch ein einziges Werkzeug in einem Schnittvorgang erzeugt werden, wobei hier dann zur eventuellen Verschleißkontur notwendigerweise ein Zurücksetzen, axiales Verfahren und erneutes Einstechen an entsprechender Stelle erfolgen muß (Fig. 4). Vorteilhafterweise wird daher ein aufgeteilter Werkzeugeinsatz vorgesehen, bei dem eine Korrektur durch einfaches Nachstellen leichter möglich ist.

Wenn die Erzeugung der Zapfenbreite mit zwei Werkzeugen realisiert wird, so sollte der Formfehler im überschnitt, der möglicherweise durch Rundlauffehler des Werkzeuges oder durch einen kinematischen Fehler des Maschinensupports verursacht wird, möglichst gering gehalten werden. Hierzu wird erfindungsgemäß eine ganz spezielle Gestaltung des als Wendeschneidplatte gestalteten Einsatzkörpers 35 vorgeschlagen, die nachstehend näher erläutert wird.

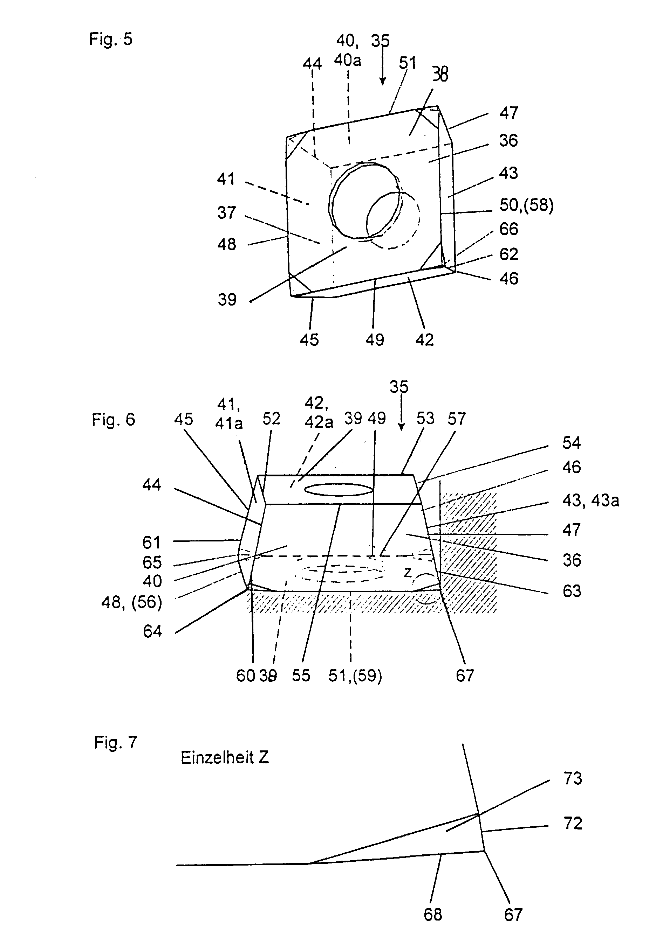

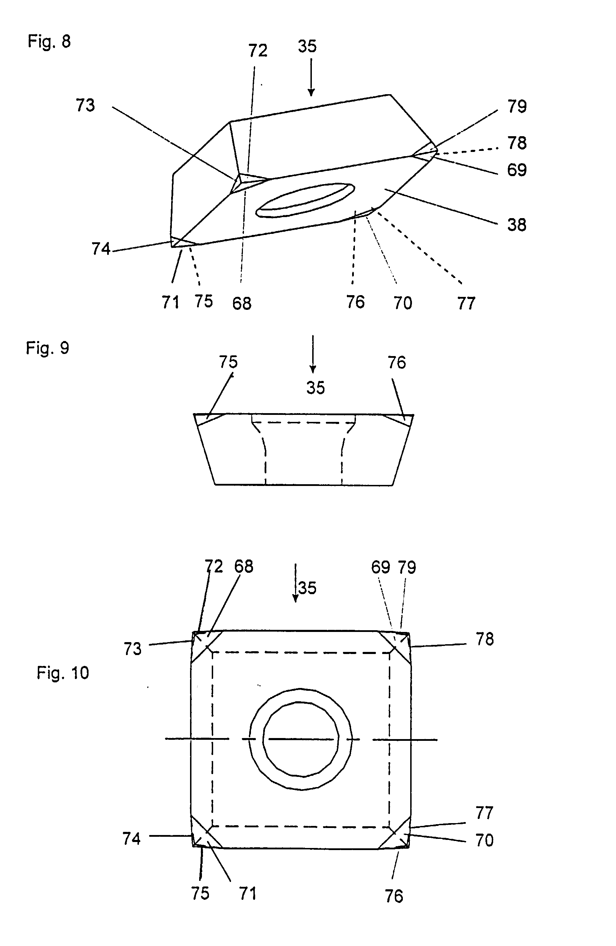

Die in den Fig. 5 bis 10 dargestellte Ausführungsform eines Einsatzkörpers 35 als Wendeschneidplatte 36 weist der Körper 37 der Wendeschneidplatte 36 zwei einander gegenüberliegende Stirnflächen 38, 39 sowie vier zueinander im rechten Winkel angeordnete Seitenflächen 40, 41, 42, 43 auf. Die Seitenflächen 40, 41, 42, 43 gehen an den Eckbereichen über die Verbindungskanten 44, 45, 46, 47 ineinander und an den Umfangskanten 48 bis 55 in die Stirnflächen 38, 39 über.

Der Körper 37 der Wendeschneidplatte 36 hat dabei eine pyramidenstumpfförmige Grundform und die unteren Umfangskanten 48, 49, 50, 51 sind als Hauptschneidkanten 56, 57, 58, 59 ausgebildet. An den Verbindungs- oder Eckkanten 44, 45, 46, 47 ergeben sich dann bei einem Einsatz der Wendeschneidpaltte 36 jeweils Nebenschneidkanten 60, 61, 62, 63, von denen jede Nebenschneidkante 60, 61, 62, 63 über eine Schneidkörperecke 64, 65, 66, 67 mit der entsprechenden Hauptschneidkante 56, 57, 58, 59 in Verbindung steht. Je nach Einsatzposition bildet dann jede Seitenfläche 40, 41, 42, 43 eine Spanfläche 40a, 41a, 42a, 43a.

Erfindungsgemäß sind an der Wendeschneidplatte 36 auf der unteren, einem Werkstück zuzuwendenden Stirnfläche 38 Abflachungen bzw. Einziehungen 68, 69, 70, 71 ausgebildet, die den gewünschten weichen Überschnitt erzeugen. Außerdem sind noch weitere Abflachungen 72 bis 79 zur Stabilisierung der Schneidecken 64, 65, 66, 67 an den Seitenflächen 40, 41, 42, 43 ausgebildet, die als Stützflächen dienen.

Vorzugsweise werden die beschriebenen Schneideinsätze mit kubischem Bornitrid oder polykristallinem kubischen Bornitrid oder einer Schicht ausl polykristallinem Diamant beschichtet. Ggf. kann eine äußere Schicht aus Aluminiumoxid aufgetragen sein. Betreffende Beschichtungen werden ausführlich in der DE 41 26 851 al und der DE 41 26 852 A1 beschrieben, worauf hiermit ausdrücklich verwiesen wird.

Alternativ hierzu ist es auch möglich, Inlays aus kubischem Bornitrid oder aus polykristallinem Diamant, die auf Substratkörper aufgelötet werden, zu verwenden. Solche Inlays werden z.B. in VDI-Z., Bd. 129 (1987) Nr. 2 - Februar, Seiten 64 bis 69, beschrieben.

## Patentansprüche

1. Fräsverfahren zur spanenden Bearbeitung von zylindrischen Konturen, von exzentrisch angeordneten zylindrischen Konturen an einem um seine Längsachse rotierenden Werkstück, von zentrisch eingespannten Kurbelwellenhublagern, vermittels drehbarer, antreibbarer Werkzeuge, bei dem eine Fertigkontur so erzeugt wird, daß diese entweder bei ausreichender Oberflächenqualität Endmaße aufweist oder noch ein Aufmaß zur Durchführung einer Fertigbearbeitung wie Schleifen oder Schlichten aufweist, wobei zur Herstellung der Fertigkontur die mit Schneideinsätzen gemäß Patentanspruch 9, insbesondere Wendeschneidplatten bestückten Werkzeuge nacheinander oder auch gleichzeitig mit dem Werkstück in Eingriff gebracht werden,
**dadurch gekennzeichnet,** daß die spanabhebende Bearbeitung mit einem Fräser
a) mit einer Schnittgeschwindigkeit von über 160 m/min,
b) mit Spanungsdicken im Bereich von 0,1 mm bis 0,3 mm, vorzugsweise im Bereich von 0,2 mm bis
0,25 mm, und c) mit einer geringen Schnittbogenlänge des Schneideinsätze tragenden Werkzeuges durchgeführt wird, daß
zumindest ein Teil der Schneideinsätze einen positiven Spanwinkel aufweist und in bezug auf das Werkstück unter einem effektiven Spanwinkel zwischen -5° und +15° und/oder einem Rückspanwinkel (γp) >0, axialer Spanwinkel, vorzugsweise ≤10° geführt wird.

2. Verfahren nach Anspruch 1, dadurch gekennzeichnet, daß die Schnittbogenlänge, d.h. die mit den entsprechenden Schneideinsätzen im Eingriff befindliche Länge des Werkzeuges in bezug auf seinen Gesamtumfang nur ein Zehntel bis ein Tausendstel des Gesamtumfanges beträgt.

3. Verfahren nach einem der Ansprüche 1 oder 2, dadurch gekennzeichnet, daß für die mindestens zwei Schnittvorgänge nacheinander mindesten zwei Werkzeuge eingesetzt werden, die zueinander unterschiedliche Schneideinsatztypen aufweisen, wobei auf jedem Werkzeug ein oder mehrere Schneideinsatztypen Verwendung finden können und/oder daß der Schnittvorgang zur Herstellung der Fertigkontur in mindestens zwei Schnittvorgänge aufgeteilt wird, wobei in den beiden Schritten unterschiedliche oder auch gleiche Bearbeitungsvorgänge durchgeführt werden, wobei vorzugsweise in einem ersten Schritt die Bearbeitung mindestens einer Hublagerwange und in einem zweiten Schritt die Bearbeitung mindestens eines Hublagers zur Erzeugung des Zapfendurchmessers und des Unterstiches erfolgt.

4. Verfahren nach einem der Ansprüche 1 bis 3, dadurch gekennzeichnet, daß in einem ersten Schritt alle rechten Konturen und in einem zweiten Schritt alle linken Konturen des Profiles, d.h. der Fertigkontur gefertigt werden und/oder daß ein Bearbeitungsschritt als orthogonales Drehfräsen durchgeführt wird.

5. Vorrichtung zur Durchführung des Verfahrens nach einem der Ansprüche 1 bis 4, mit mindestens einem Werkzeug mit Schneideinsätzen, dadurch gekennzeichnet, daß die Vorrichtung (100) mindestens zwei mit Schneideinsätzen gemäß Patentanspruch 9 versehene Werkzeuge (15, 16) aufweist, wobei jedes Werkzeug (15, 16) ein mit Schnittgeschwindigkeiten über 160 m/min bewegbarer Fräser ist, der Schneideinsätze (34, 35) aufweist, die einen positiven Spanwinkel besitzen und in bezug auf das Werkstück unter einem effektiven Spanwinkel zwischen -5° und +15° und einem Rückspanwinkel (γp) > 0 führbar sind.

6. Vorrichtung nach Anspruch 5, dadurch gekennzeichnet, daß die Schneideinsätze (34, 35) so ausgebildet und angeordnet sind, daß in einem Einstichvorgang jeweils etwa die Hälfte der Fertigkontur des Zapfens erzeugbar ist.

7. Vorrichtung nach Anspruch 5 oder 6, dadurch gekennzeichnet, daß als Werkzeug ein Scheibenfräser und/oder ein orthogonaler Drehfräser verwendet wird.

8. Vorrichtung nach einem der Ansprüche 5 bis 7, dadurch gekennzeichnet, daß für mindestens ein Werkzeug (21, 22) ein Support mit zwei Schlitten (25, 26; 27, 29) vorgesehen sind, die eine Verfahrbarkeit des Werkzeuges (21, 22) in zwei zueinander senkrechten Richtungen ermöglichen.

9. Schneideinsatz (35) zum Fräsen, mit einer im wesentlichen rechteckigen Spanfläche (38), die durch jeweilige Hauptschneidkanten (56 bis 59) umfangsseitig begrenzt wird, und mit unter einem positiven Keilwinkel angeordneten Freiflächen (40 bis 43), deren jeweils gemeinsame Kanten (44 bis 47) Nebenschneidkanten (60, 61, 62, 63) bilden, und mit einem positiven Spanwinkel, dadurch gekennzeichnet, daß die Spanfläche (38) im Bereich der eine Schneidecke bildenden benachbarten Hauptschneidkanten eine Abflachung oder Einziehung (68, 69, 70, 71) aufweist, die sich in den Bereich beider benachbarter Hauptschneidkanten erstreckt und sich bei tangentialer Einbauweise des Schneideinsatzes zwischen der wirksamen Spanfläche (40a, 41a, 42a, 43a) und der wirksamen Freifläche (38) ein Winkel von 75° bis 95°, vorzugsweise von 85° bis 95°, einstellt, so daß ein effektiver Spanwinkel zwischen -5° und +15°, vorzugsweise zwischen -5° und +5°, vorliegt.

10. Schneideinsatz nach Anspruch 9, dadurch gekennzeichnet, daß durch die Abflachung oder Einziehung (68, 69, 70, 71) die Schneidkörperecke (64, 65, 66, 67) gegenüber der Hauptschneidkante (56, 57, 58, 59) zurückliegend angeordnet ist und/oder die Schneidkörperecke (64, 65, 66, 67) um etwa 0,05 mm bis 1 mm gegenüber der Hauptschneidkante (56, 57, 58, 59) zurückliegend angeordnet ist.

11. Schneideinsatz nach einem der Ansprüche 9 oder 10, dadurch gekennzeichnet, daß die Abflachung oder Einziehung (68, 69, 70, 71) als ebene oder gekrümmte oder mehrteilige Fläche ausgebildet ist und/oder daß sich die Abflachung oder Einziehung (68, 69, 70, 71) maximal auf der halben Länge der Hauptschneidkante und bis zur Schneidkörperecke, vorzugsweise entlang eines Viertels der Hauptschneidkante erstreckt.

12. Schneideinsatz nach einem der Ansprüche 9 bis 11, dadurch gekennzeichnet, daß mindestens eine Seitenfläche (40, 41, 42, 43) im Bereich einer jeweils zugeordneten Schneidkörperecke mindestens eine Abflachung oder Einziehung (72 bis 79) als Stützfläche aufweist und/oder daß die Abflachung oder Einziehung (68 bis 79) an der Stirnfläche (38, 39) und/oder der Seitenfläche (40, 41, 42, 43) als ebene, gekrümmte oder mehrteilige Fläche ausgebildet ist.

13. Schneideinsatz nach einem der Ansprüche 9 bis 12, dadurch gekennzeichnet, daß die Schneidkörperecke (64, 65, 66, 67) als Kugelkalotte, Kegel oder Pyramide oder als Kegel- oder Pyramidenstumpf ausgebildet ist und/oder daß auf der wirksamen Spanfläche (40a, 41a, 42a, 43a) ein oder mehrere Spanformelemente angeordnet sind.

14. Schneideinsatz nach einem der Ansprüche 9 bis 13, dadurch gekennzeichnet, daß der Schneideinsatz mit einem kubischen Bornitrid (CBN) und/oder polykristallinen Diamant (PKD) beschichtet oder mit einem Inlay aus CBN oder PKD versehen ist und/oder daß als äußerste Schicht eine Lage Al₂O₃ aufgetragen ist.

## Claims

1. Metal cutting process for machining cylindrical contours of excentrically positioned cylindrical shapes on a workpiece of centrically mounted crankshaft bearings mounted to rotate about a longitudinal axis, by means of a rotatable drivable tools wherein a finished contour is produced such that because of sufficient good surface quality it either has final dimensions or that it has oversize for carrying out a finish machining such as grinding or polishing, whereby for producing the finish contour the tools provided with cutting inserts according to claim 9, especially with indexable cutting inserts, are brought successively or even simultaneously into engagement with the workpiece,
**characterised in that**
the metal-cutting machining using a milling tool is carried out
a) with a cutting speed of more than 160 m/min,
b) with a chip thickness in the range of 0,1 mm to 0,3 mm, preferably in the range of 0,2 mm to 0,25 mm, and
c) with a small cutting arc length of the tool carrying the cutting inserts,
that at least some of the cutting inserts have a positive rake angle and are guided in relation to the workpiece at an effective cutting angle between -5° and +15° and/or at a reverse cutting angle (γₚ) > 0 ,axial cutting angle, preferably ≤ 10°.

2. Process according to claim 1 characterised, in that the cutting-arc length, that is the length of the tool with the corresponding cutting inserts in engagement, amounts relative to its entire periphery only to a tenth to a thousandth of the entire periphery.

3. Process according to claim 1 or 2, characterised in that for at least two succeeding cutting operations two tools are used that have different cutting-inserts types to each other whereby each tool using one or more cutting insert type and/or that the cutting operation for producing the finished shape is done in two cutting operations in which different or the same cutting procedures are carried out, whereby preferably in a first step at least one crank cheek is machined and in a second step at least one crank pin is machined to produce the pin diameter and the undercuts.

4. Process according to one of claims 1 to 3, characterised in that in a first step all right-side contours and in a second step all left-side contours of the profile, that is of the finished shape, are formed and/or that one machining step is carried out as an orthogonal rotary milling.

5. Device for carrying out the process according to one of claims 1 to 4, with at least-one tool with cutting inserts, characterised in that the device (100) has at least two tools (15, 16) provided with cutting inserts according to claim 9, each tool (15, 16) being a miller movable with cutting speeds of more than 160 m/min and are guidable in relation to the workpiece at an effective cutting angle between -5° to +15° and a reverse cutting angle (γₚ) > 0, provided with corresponding cutting inserts (34, 35) having a positive rake angle.

6. Device according to claim 5, characterised in that the cutting inserts (34, 35) are shaped and mounted such that about half of the finished shape of a pin is producible in one grooving pass.

7. Device according to claim 5 or 6, characterised in that a disk miller or an orthogonal rotary miller is used as a tool.

8. Device according to one of claims 5 to 7, characterised in that for at least one tool (21, 22) a support with two slides (25, 26; 27, 28) is provided that allows movement of the tool (21, 22) in two mutually perpendicular directions.

9. Cutting insert (35) for milling with a generally perpendicular cutting face (38) that is peripherally bounded by respective main cutting edges (56 to 59) and with clearance faces (40 to 43) set at a positive wedges angle each of whose common edges (44 to 47) form auxiliary cutting edges (60, 61, 62, 63), and with a positive rake angle, characterised in that the rake face (38) has in the region of an adjacent main cutting edge forming a cutting corner a flat or recess (68, 69, 70, 71) which extends into.the region of both adjacent main cutting edges and with tangential mounting of the cutting insert between the effective cutting faces (41a, 41a, 42a, 43a) and the effective free face (38) an angle of 75° to 95°, preferably 85° to 95°, is set so as to form an effective cutting angle between -5° and +15°, preferably between -5° and +5°.

10. Cutting insert according to claim 9, characterised in that the flats or recesses (68, 69, 70, 71) recess the cutting body corners (64, 65, 66, 67) relative to the main cutting edge (56, 57, 58, 59) and/or the cutting-body corner (64, 65, 66,67) are arranged recessing by about 0,05 mm to 1 mm relative to the main cutting edge (56, 57, 58, 59).

11. Cutting insert according to one of claims 9 or 10, characterised in that the flats or recesses (68, 69, 70, 71) are formed as planer or curved or multipart surfaces and/or that the flats or recesses (68, 69, 70, 71) extend at most over half of the length of the main cutting edge and up to the cutting-body corners, preferably extend along a quarter of the main cutting edge.

12. Cutting insert according to one of claims 9 to 11, characterised in that at least one side face (40, 41, 42, 43) has in the region of a respective cutting-body corner at least one flat or recess (72 to 79) as a support face and/or that the flats or recesses (68 to 79) are formed on the end face (38, 39) and/or on the side faces (40, 41, 42, 43) as planar, curved, or multipart surfaces.

13. Cutting insert according to one of claims 9 to 12, characterised in that the cutting-body corners (64, 65, 66, 67) are formed as partial spheres, cones or bumps or as frustopyramids or frustocones and/or that one or more chip-shaping elements are provided on the effective rake face (40a, 41a, 42a, 43a).

14. Cutting insert according to one of claims 9 to 13, characterised in that the cutting insert is coated with a cubic boron nitride (CBN) and/or polycrystalline diamond (PKD) or is provided with an inlay of CBN or PKD and/or that it has an outermost layer of Al₂O₃.

## Revendications

1. Procédé de fraisage pour l'usinage par enlèvement de copeaux de contours cylindriques, de contours cylindriques sur une pièce tournant autour de son axe longitudinal, qui sont disposés de façon excentrique, de paliers de levage de vilebrequin serrés de manière centrique, au moyen d'outils rotatifs, entraînables, dans le cas duquel un contour fini est réalisé de telle manière que celui-ci présente soit, avec une qualité suffisante de surface, des dimensions finales soit encore une surmesure pour effectuer un travail de finissage tel que la rectification ou le finissage, les outils munis d'inserts de coupe selon la revendication 9, en particulier de plaquettes réversibles, étant mis en prise l'un après l'autre ou aussi simultanément avec la pièce pour la réalisation du contour fini,
**caractérisé par le fait** que l'usinage par enlèvement de copeaux est effectué avec une fraise
a) avec une vitesse de coupe supérieure à 160 m/min,
b) avec des épaisseurs de coupe comprises entre 0,1 mm et 0,3 mm, de préférence entre 0,2 mm et 0,25 mm, et
c) avec une faible longueur de l'arc de coupe de l'outil portant des inserts de coupe,
que du moins quelques-uns des inserts de coupe présentent un angle positif de coupe et sont guidés, par rapport à la pièce, à un angle effectif de coupe qui est compris entre -5° et +15° et/ou à un angle de coupe vers l'arrière d'outil (γp) > 0, angle axial de coupe, de préférence ≤ 10°.

2. Procédé selon la revendication 1, caractérisé par le fait que la longueur de l'arc de coupe, c'est-à-dire la longueur de l'outil, qui est en prise avec les inserts de coupe correspondants, par rapport à sa périphérie totale, est comprise seulement entre un dixième et un millième de la périphérie totale.

3. Procédé selon l'une des revendications 1 ou 2, caractérisé par le fait que, pour les deux opérations de coupe du moins, on utilise deux outils du moins l'un après l'autre qui présentent l'un par rapport à l'autre des types différents d'inserts de coupe, un ou plusieurs types d'inserts de coupe pouvant être utilisés sur chaque outil, et/ou que l'opération de coupe pour la réalisation du contour fini est effectuée en deux opérations de coupe du moins durant lesquelles des processus différents d'usinage ou également des processus pareils d'usinage sont effectués, de préférence, dans une première étape, du moins une flasque de palier de levage étant usinée et, dans une deuxième étape, du moins un palier de levage étant usiné pour produire le diamètre du tourillon et la sous-coupe.

4. Procédé selon l'une des revendications 1 à 3, caractérisé par le fait que, dans une première étape, tous les contours droits et, dans une deuxième étape, tous les contours gauches du profil, c'est-à-dire du contour fini sont fabriqués, et/ou qu'une étape d'usinage est réalisée en tant que fraisage rotatif orthogonal.

5. Dispositif pour la mise en oeuvre du procédé selon l'une des revendications 1 à 4, comprenant du moins un outil muni d'inserts de coupe, caractérisé par le fait que le dispositif (100) présente du moins deux outils (15, 16) pourvus d'inserts de coupe selon la revendication 9, chaque outil (15, 16) étant une fraise qui peut être déplacée avec des vitesses de coupe supérieures à 160 m/min et qui présente des inserts de coupe (34, 35) qui possèdent un angle de coupe positif et peuvent être guidés, par rapport à la pièce, à un angle de coupe effectif compris entre - 5° et +15° et à un angle de coupe vers l'arrière d'outil (γp) > 0.

6. Dispositif selon la revendication 5, caractérisé par le fait que les inserts de coupe (34, 35) sont formés et disposés de telle manière que la moitié à peu près du contour fini du tourillon peut être produite respectivement dans une opération de plongée.

7. Dispositif selon la revendication 5 ou 6, caractérisé par le fait qu'une fraise à disque et/ou une fraise rotative orthogonale est utilisée comme outil.

8. Dispositif selon l'une des revendications 5 à 7, caractérisé par le fait que, pour un outil (21, 22) du moins, on prévoit un support avec deux chariots (25, 26; 27, 29) qui permettent que l'outil (21, 22) peut être déplacé dans deux directions verticales l'une à l'autre.

9. Insert de coupe (35) destiné au fraisage, avec une face de coupe (38) pour l'essentiel rectangulaire qui est limitée sur la périphérie par des tranchants principaux respectifs (56 à 59), et avec des faces de dépouille (40 à 43) disposées à un angle positif de taillant, dont les arêtes respectivement communes (44 à 47) forment des tranchants secondaires (60, 61, 62, 63), et avec un angle de coupe positif, caractérisé par le fait que la face de coupe (38) présente, dans la zone des tranchants principaux voisins formant un coin de coupe, un aplatissement ou une partie reculée (68, 69, 70, 71) qui s'étend dans la zone des deux tranchants principaux voisins, et que, dans le cas d'un montage tangentiel de l'insert de coupe, un angle compris entre 75° et 95°, de préférence entre 85° et 95°, est réglé entre la face effective de coupe (40a, 41a, 42a, 43a) et la face effective de dépouille (38), de sorte qu'il y a un angle de coupe effectif qui est compris entre -5° et +15°, de préférence entre -5° et +5°.

10. Insert de coupe selon la revendication 9, caractérisé par le fait que, dû à l'aplatissement ou à la partie reculée (68, 69, 70, 71), le coin (64, 65, 66, 67) du corps de coupe est disposé de façon reculée par rapport au tranchant principal (56, 57, 58, 59) et/ou que le coin (64, 65, 66, 67) du corps de coupe est reculé d'à peu près 0,05 mm à 1 mm par rapport au tranchant principal (56, 57, 58, 59).

11. Insert de coupe selon l'une des revendications 9 ou 10, caractérisé par le fait que l'aplatissement ou la partie reculée (68, 69, 70, 71) est formé en tant que surface plane ou courbée ou à plusieurs parties, et/ou que l'aplatissement ou la partie reculée (68, 69, 70, 71) s'étend au maximum sur, la demi-longueur du tranchant principal et jusqu'au coin du corps de coupe, de préférence le long d'un quart du tranchant principal.

12. Insert de coupe selon l'une des revendications 9 à 11, caractérisé par le fait que du moins une face latérale (40, 41, 42, 43) présente, dans la zone d'un coin respectivement associé du corps de coupe, du moins un aplatissement ou une partie reculée (72 à 79) en tant que surface d'appui, et/ou que l'aplatissement ou la partie reculée (68 à 79) sur le front (38, 39) et/ou sur la face latérale (40, 41, 42, 43) est formé en tant que surface plane, courbée ou à plusieurs parties.

13. Insert de coupe selon l'une des revendications 9 à 12, caractérisé par le fait que le coin (64, 65, 66, 67) du corps de coupe est réalisé en tant que calotte sphérique, cône ou pyramide ou comme tronc de cône ou de pyramide, et/ou qu'un ou plusieurs éléments à former le copeau sont disposés sur la face effective de coupe (40a, 41a, 42a, 43a).

14. Insert de coupe selon l'une des revendications 9 à 13, caractérisé par le fait que l'insert de coupe est revêtu d'un nitrure de bore cubique (CBN) et/ou de diamant polycristallin (PKD) et/ou est pourvu d'un insert (inlay) en CBN ou PKD, et/ou qu'une couche en Al₂O₃ est appliquée en tant que couche la plus extérieure.
